# FASCICULE DE BREVET EUROPEEN

(11) **EP 2 950 970 B1**
(45) Date de publication et mention de la délivrance du brevet: **13.06.2018**
(21) Numéro de dépôt: 14704857.3
(22) Date de dépôt: 29.01.2014
(51) Int. Cl.: B23K 37/04, B23K 37/053, B23K 20/12, F01D 5/30

(54) **DISPOSITIF AUXILIAIRE DE SOUDAGE DE DISQUES BROCHES, COMPRENANT UNE CEINTURE AMORTISSANTE, ET PROCEDE DE SOUDAGE PAR FRICTION**
HILFSVORRICHTUNG ZUM SCHWEISSEN VON GERÄUMTEN SCHEIBEN MIT EINEM DÄMPFUNGSBAND UND REIBSCHWEISSVERFAHREN DAFÜR
AUXILIARY DEVICE FOR WELDING BROACHED DISKS, HAVING A DAMPING BELT, AND FRICTION WELDING METHOD

(30) Priorité: 31.01.2013 FR 1350843
(43) Date de publication de la demande: 09.12.2015
(73) Titulaire: SNECMA, 75015 Paris (FR)
(72) Inventeur: BOUR, Jean-Luc, F-77550 Moissy-Cramayel Cédex (FR)
(74) Mandataire: Brevalex
(86) Numéro de dépôt international: PCT/FR2014/050157
(87) Numéro de publication internationale: WO 2014/118464

(56) Documents cités:
- US-A1- 2006 051 211

## Description

Le sujet de l'invention est, sous un premier aspect, un dispositif auxiliaire de soudage de disques brochés comprenant une ceinture amortissante, et, sous un autre aspect, un procédé associé de soudage par friction.

Les disques des turboréacteurs et turbopropulseurs sont fréquemment soudés entre eux par friction et notamment par friction inertielle dans des plans d'assemblage perpendiculaires à l'axe de rotation du rotor ainsi créé. Ils comprennent fréquemment à leur périphérie des alvéoles brochés destinés à la réception des pieds d'aubes, et éventuellement des crochets d'arrêt des aubes, situés aux extrémités des alvéoles.

Ce procédé de soudage est extrêmement énergique et produit presque toujours des vibrations à haute intensité et à haute fréquence. Des fissures par fatigue peuvent alors apparaître au fond des alvéoles ainsi qu'au fond des crochets d'arrêt des aubes.

Ces inconvénients des soudages par friction sont déjà connus, et il a été proposé d'y remédier en associant aux pièces à souder des éléments amortisseurs de ces vibrations. Les documents US 2004/108358 A et 2010/193 572 A décrivent quelques exemples. Il semble toutefois que les dispositifs amortisseurs de ces brevets ne soient pas adaptés au cas particulier des disques entaillés d'alvéoles périphériques et n'empêchent pas l'apparition de fissures par fatigue vibratoire aux endroits les plus exposés, à savoir aux raccordements entre les dents périphériques séparant les alvéoles et la partie principale du disque, à partir du fond des alvéoles, ainsi qu'au fond des crochets d'arrêt des aubes. Quant à US 2006/051211, sur lequel le préambule de la revendication 1 se base, il décrit un élément amortisseur de nature plus complexe que celui de l'invention comprenant deux ceintures en polymère latérales, et retenues entre deux flasques métalliques, qu'on approche l'un de l'autre pour maintenir les ceintures sur les faces latérales du disque. L'élément amortisseur de cette antériorité est bien relatif à un disque à souder par friction, mais sans que ce disque soit entaillé d'alvéoles brochés séparés par les dents pour recevoir des pieds d'aubes, puisque le disque de cette antériorité est un disque aubagé monobloc déjà porteur des aubes.

L'invention a été conçue pour offrir un dispositif de protection des alvéoles brochés des disques par amortissement des vibrations qui soit adapté aux disques pourvus d'alvéoles périphériques.

Selon l'invention, le dispositif nouveau consiste en une ceinture circulaire consistant en une ceinture circulaire en polymère viscoélastique, la ceinture comprenant une alternance de bossages et de pas, caractérisé en ce que la ceinture comprend un bandage à arranger autour de la périphérie du disque en serrant le disque, et les bossages et les pas sont sur la face intérieure du bandage. Le bandage est circulaire et fermé, et le serrage est opéré par un restreint radial du bandage.

La ceinture et ses bossages enveloppent partiellement les dents du disque et limitent l'amplitude de leurs vibrations, d'autant plus que les bossages, serrés entre les paires de dents voisines, contribuent à soumettre les dents à des modes de vibrations en phase, qui réduisent donc les hautes fréquences, tout en diminuant l'amplitude des vibrations, grâce aux propriétés amortissantes de leur matériaux. On soulignera le rôle du bandage circulaire fermé, qui enveloppe le disque avec un rétreint radial, pour contribuer à l'amortissement. Contrairement au dispositif du US 2006/051211, celui-ci est monobloc et donc facile à fabriquer et à employer. Il est aussi plus léger, entre autres grâce à l'omission des flasques métalliques nécessaires pour maintenir la ceinture latérale contre le disque, et qui peuvent posséder une inertie importante nuisant à l'amortissement.

Selon un perfectionnement, la ceinture comprend des jupes latérales s'avançant en direction radiale intérieure. Elles contribuent à maintenir la ceinture en place pendant le procédé de soudage, tout en diminuant les vibrations auxquelles les crochets d'arrêt des aubes, quand ils existent, sont exposés. Simultanément, ces jupes latérales protègent les surfaces finies des alvéoles brochés des éventuelles microprojections liées à la soudure.

Le polymère doit posséder une souplesse et une élasticité suffisantes pour lui permettre d'être disposé autour du disque avec un serrage, puis d'être retiré du disque sans déformation résiduelle. Il doit aussi posséder idéalement des caractéristiques d'amortissement suffisantes pour réduire efficacement l'amplitude des vibrations. Des polyuréthanes peuvent être proposés.

L'invention est encore relative à un procédé de soudage par friction d'un disque broché, caractérisé en ce qu'il consiste à employer le dispositif auxiliaire comme ci-dessus, en l'ajustant de façon serrée autour du disque, les bossages pénétrant dans des alvéoles établis en périphérie du disque, de façon à être comprimés entre des dents du disque alternant avec les alvéoles, pendant le soudage.

Selon une caractéristique avantageuse et optionnelle, la ceinture a un rayon inférieur au rayon extérieur du disque de manière à montrer un rétreint de 3 à 20% quand il en est séparé.

L'invention sera maintenant décrite dans ses différents aspects au moyen des figures suivantes, qui sont annexées à titre purement illustratif et décrivent une des réalisations possibles de l'invention :
- la figure 1 est une vue générale d'un disque auquel l'invention peut être appliquée ;
- la figure 2 est une vue générale de la ceinture à l'état libre ;
- la figure 3 est une vue de détail du disque équipé de la ceinture ;
- la figure 4 est une vue d'un assemblage de rotor équipé de l'invention.

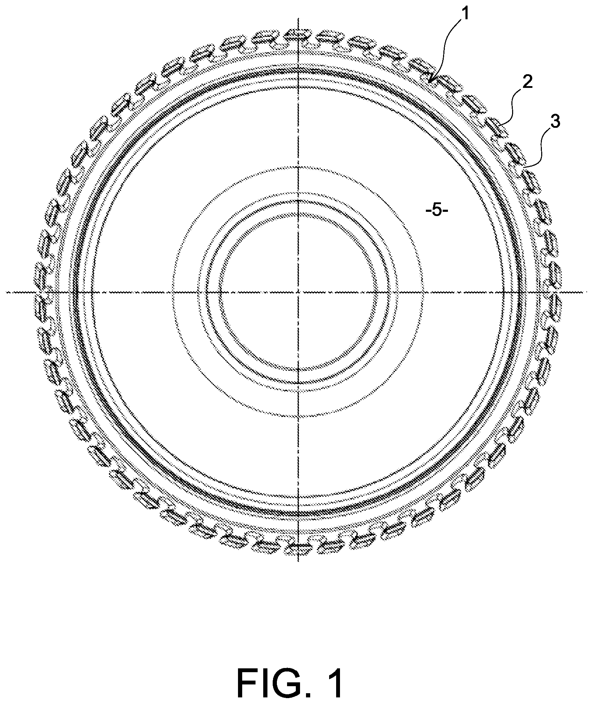

On se reporte à la figure 1. Le disque auquel peut être appliqué l'invention comprend une périphérie où des alvéoles 1 alternent avec des portions pleines appelées ici dents 2. Les alvéoles 1 comprennent un fond épanoui vers le centre du disque, et une partie supérieure plus étroite formant un col 3. Les alvéoles 1 peuvent être brochés longitudinalement ou obliquement ; des crochets peuvent aussi équiper les faces d'extrémité des dents 2, et retenir plus tard les aubes du disque, dont les pieds, glissés dans les alvéoles 1, auront des extrémités munies de crochets complémentaires ; des anneaux seront introduits dans les crochets 4 des dents 2 et dans ceux des pieds d'aubes pour retenir celles-ci le long des alvéoles 1. Cette disposition est connue et n'est pas représentée.

Avec une telle forme de disque, des fissures sont susceptibles d'apparaître aux raccordements 6 entre les dents 2 et la portion principale 5 du disque, centrale et continue, en s'amorçant sur les côtés de ces raccordements 6, et précisément aux endroits donnant sur le fond des alvéoles 1, où les dents 2 sont le plus étroites, ainsi qu'aux raccordements entre les crochets 4 et les dents 2.

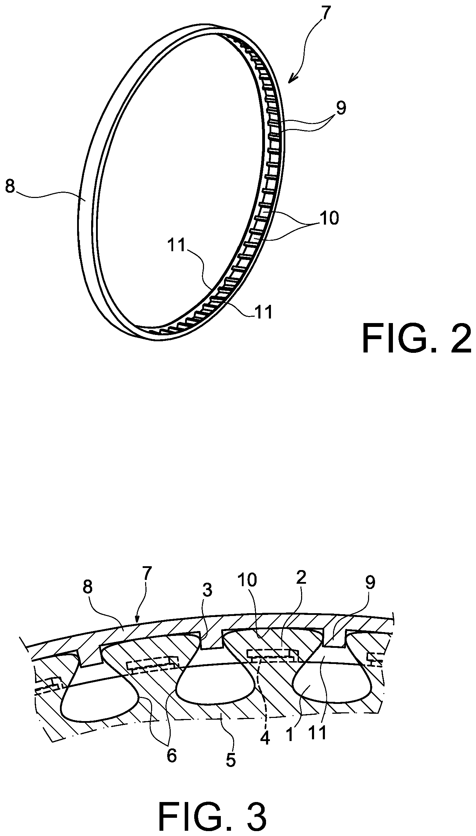

Il est conforme à l'invention d'utiliser une ceinture 7 amortissante, représentée à la figure 2, pendant le soudage. Elle est en polymère présentant une viscoélasticité suffisante pour être souple, élastique et amortir fortement les vibrations. Elle comprend un bandage 8 qu'on arrange autour de la périphérie du disque, des bossages 9 séparés par des pas 10 ou crans à sa face intérieure et des jupes 11 latérales des deux côtés du bandage 8, qui sont des bandes pleines s'avançant radialement vers l'intérieur. Les bossages 9 pénètrent entre les dents 2 de manière à combler les cols 3.

Le bandage 8 presse sur les dents 2 avec une force de rétreint qui dépend de son expansion quand il est arrangé autour des dents 2. Les bossages 9 sont comprimés entre des dents adjacentes, contribuent à la solidariser et exercent un serrage en direction tangentielle, qui réduit la facilité des dents 2 à fléchir. Les jupes 11 aident à maintenir la ceinture 7 autour du disque pendant le soudage, et servent encore à exercer une pression et un amortissement sur les crochets 4.

Les dents 2 ayant moins de facilité à fléchir autour de leur raccordement à la partie principale 5 du disque, les raccordements 6 sont moins contraints et les fissures par fatigue n'y apparaissent pas, ou y apparaissent beaucoup plus difficilement.

La ceinture 7 est avantageusement en polyuréthane. Le Courbhane 60R (marque déposée) est une nuance offrant des caractéristiques, notamment d'amortissement, qui conviennent bien à l'invention.

On a constaté que de bons résultats d'amortissement étaient obtenus avec un bandage 8 dont la face intérieure avait, à l'état libre, un rayon inférieur de 3 % à 20 % au rayon extérieur du disque (les rayons étant mesurés aux endroits des pas 10 et des dents 2).

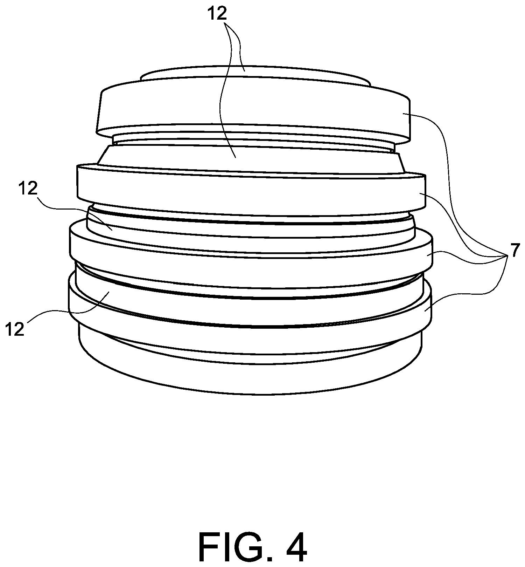

La figure 4 illustre l'utilisation des ceintures 7, qui sont ici disposées à plusieurs exemplaires sur autant de disques 12 déjà assemblés entre eux, mais laissées en place tant que d'autres disques, non représentés, sont susceptibles encore d'être soudés à l'assemblage déjà obtenu.

Le soudage est effectué, par ailleurs, de la même façon que dans l'art connu.

## Revendications

1. Dispositif auxiliaire de soudage par friction de disques brochés, équipés d'alvéoles (1) de réception de pieds d'aubes séparés par des dents, consistant en une ceinture (7) circulaire en polymère viscoélastique, la ceinture comprenant une alternance de bossages (9) et de pas (10), **caractérisé en ce que** la ceinture comprend un bandage circulaire et fermé (8) à arranger autour de la périphérie du disque en serrant les dents du disque par un rétreint radial du bandage, et les bossages (9) et les pas (10) sont sur la face intérieure du bandage (8).

2. Dispositif auxiliaire de soudage selon la revendication 1, **caractérisé en ce que** la ceinture comprend des bandes planes (11) sur les bords latéraux de la ceinture qui s'avancent en direction radiale intérieure.

3. Dispositif auxiliaire de soudage selon l'une quelconque des revendications 1 ou 2, **caractérisé en ce que** le polymère est un polyuréthane.

4. Procédé de soudage par friction d'un disque broché d'alvéoles (1) de réception de pieds d'aubes, **caractérisé en ce qu'**il consiste à employer le dispositif auxiliaire selon l'une quelconque des revendications précédentes, en ajustant le bandage (8) de façon serrée autour du disque, les bossages (9) pénétrant dans les alvéoles (1) établis en périphérie du disque, de façon à être comprimés entre des dents (2) du disque alternant avec les alvéoles, pendant le soudage.

5. Procédé de soudage selon la revendication 4, **caractérisé en ce que** la ceinture a, à un état libre, un rayon intérieur inférieur de 3 % à 20 % à un rayon extérieur du disque.

## Patentansprüche

1. Hilfsvorrichtung zum Reibschweißen von geräumten Scheiben, die mit Aufnahmezellen (1) zur Aufnahme von Schaufelfüßen versehen sind, die durch Zähne voneinander getrennt sind, bestehend aus einem kreisförmigen Ring (7) aus viskoelastischem Polymer, wobei der Ring abwechselnd angeordnete Buckel (9) und Teilungsflächen (10) aufweist,
**dadurch gekennzeichnet,**
**dass** der Ring ein kreisförmiges und geschlossenes Band (8) umfasst, das um die Außenlinie der Scheibe herum zu legen ist, wobei die Zähne der Scheibe durch radiales Verengen des Bandes festgeklemmt werden, und die Buckel (9) und Teilungsflächen (10) sich an der Innenseite des Bandes (8) befinden.

2. Hilfsvorrichtung zum Schweißen nach Anspruch 1,
**dadurch gekennzeichnet,**
**dass** der Ring flache Bänder (11) an den Seitenrändern des Rings umfasst, die in radialer Richtung nach innen ragen.

3. Hilfsvorrichtung zum Schweißen nach einem der Ansprüche 1 oder 2,
**dadurch gekennzeichnet,**
**dass** das Polymer ein Polyurethan ist.

4. Verfahren zum Reibschweißen einer geräumten Scheibe mit Aufnahmezellen (1) für Schaufelfüße,
**dadurch gekennzeichnet,**
**dass** es darin besteht, die Hilfsvorrichtung nach einem der vorherigen Ansprüche zu verwenden, indem das Band (8) um die Scheibe herum in Klemmanordnung eingerichtet wird, wobei die Buckel (9) in die am Außenumfang der Scheibe hergestellten Aufnahmezellen (1) eindringen, so dass sie während des Schweißens zwischen den mit den Aufnahmezellen abwechselnd angeordneten Zähnen (2) zusammengedrückt werden.

5. Schweißverfahren nach Anspruch 4,
**dadurch gekennzeichnet,**
**dass** der Ring in freiem Zustand einen Innenradius aufweist, der um 3% bis 20% geringer ist als ein Außenradius der Scheibe.

## Claims

1. Auxiliary device for friction welding broached disks equipped with slots (1) for receiving blade feet, consisting in a viscoelastic polymer circular belt (7), the belt comprising an alternation of bosses (9) and notches (10), **characterised in that** the belt comprises a circular and closed bandage (8) to be arranged tightly around the periphery of the disk by tightening the teeth of the disk by a radial restraint of the bandage, and the bosses (9) and the notches (10) are on the inside face of the bandage (8).

2. Auxiliary welding device according to claim 1, **characterised in that** the belt comprises flat strips (11) on the side edges of the belt that project radially inwards.

3. Auxiliary welding device according to either claim 1 or 2, **characterised in that** the polymer is a polyurethane.

4. Friction welding method for welding a disk broached with slots (1) for receiving blade feet, **characterised in that** it consists of using the auxiliary device according to any one of the previous claims, by adjusting the bandage (8) to be tight around the disk, the bosses (9) penetrating into the slots (1) formed around the periphery of the disk, such that they are compressed between teeth (2) of the disk alternating with the slots, during the welding.

5. Welding method according to claim 4, **characterised in that** when the belt has, in a free state, its inside radius 3% to 20% smaller than an outside radius of the disk.
